# EUROPEAN PATENT SPECIFICATION

(11) **EP 1 672 919 B1**
(45) Date of publication and mention of the grant of the patent: **29.07.2009**
(21) Application number: 05292726.6
(22) Date of filing: 16.12.2005
(51) Int. Cl.: H04N 5/445, H04H 20/28, H04H 40/18, H04H 60/27, H04H 60/68

(54) **Apparatus for processing texts in digital broadcast receiver and method thereof**
Vorrichtung zur Verarbeitung von Texten in einem digitalen Rundfunkempfänger und entsprechendes Verfahren
Dispositif pour le traitement de textes dans un récepteur de radiodiffusion numérique et procédé correspondant

(30) Priority: 20.12.2004 KR 2004108774
(43) Date of publication of application: 21.06.2006
(73) Proprietor: LG Electronics Inc., Seoul 150-721 (KR)
(72) Inventor: Bae, Jin Hwan c/o 101-807, Samsung Apt., Seoul 122-768 (KR)
(74) Representative: Loisel, Bertrand

(56) References cited:
- WO-A-01/61893
- WO-A-02/32122
- US-A- 5 650 826
- US-B1- 6 396 544
- US-B1- 6 493 877

## Description

### BACKGROUND OF THE INVENTION

### Field of the Invention

The present invention relates to a digital broadcast receiver (digital television receiver, etc.), and more particularly, to an apparatus for processing texts in a digital broadcast receiver and method thereof.

### Discussion of the Related Art

Generally, as digital broadcast technologies are commercialized, enormous information is transferred. Yet, it is still difficult to select and/or view a specific broadcast or to extract specific information more quickly and accurately.

For this, a broadcast program guide, a broadcast caption, a representation using computer graphics, a ticker service and a personal video recorder (hereinafter abbreviated PVR) can be utilized.

By utilizing the EPG (electronic program guide) function, a program can be searched through a TV screen to reserve a record conveniently or a TV program is searched or recorded to make a viewing schedule according to a personal taste, Hence, without being troubled with a planned time of a broadcast program, a user can view a specific program at anytime.

However, the related art method has the following problems.

First of all, if a user attempts to obtain specific information from a digital broadcast, he has to view the digital broadcast entirely.

Secondly, in case of using the PVR, a user can acquire information by selecting a viewing time. Yet, system requirements such as capacity of a storage device of the PVR for recording a broadcast are increased. If a quantity of necessary information is smaller than a time for viewing a broadcast to acquire specific information, time is unnecessarily wasted.

### SUMMARY OF THE INVENTION

Accordingly, the present invention is directed to an apparatus for processing texts in a digital broadcast receiver and method thereof that substantially obviate one or more problems due to limitations and disadvantages of the related art.

An object of the present invention is to provide an apparatus for processing texts in a digital broadcast receiver and method thereof, in which the text is included in input data of the digital broadcast receiver.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is proposed an apparatus for processing texts in a digital broadcast receiver according to claim 1.

In another aspect, the present invention proposes a method of processing texts in a digital broadcast receiver according to claim 10.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of an apparatus for processing texts in a digital broadcast receiver according to an embodiment of the present invention; and

FIG. 2 is a flowchart for a method of processing texts in a digital broadcast receiver according to an embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

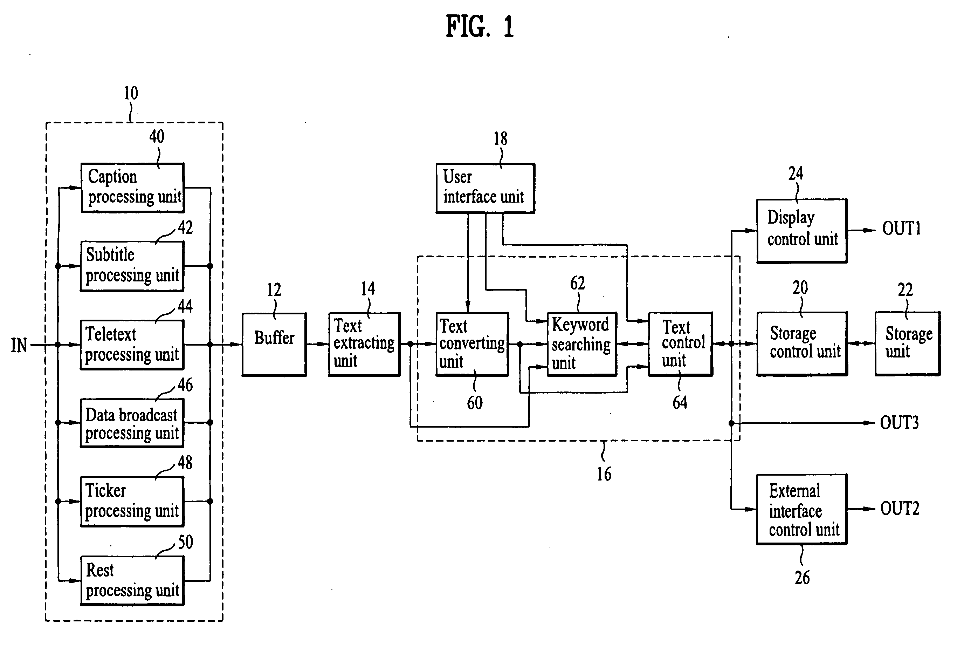

FIG. 1 is a block diagram of an apparatus for processing texts in a digital broadcast receiver according to an embodiment of the present invention.

Referring to FIG. 1, an apparatus for processing texts in a digital broadcast receiver according to an embodiment of the present invention includes a contents extracting unit 10, a buffer 12, a text extracting unit 14, a text processing unit 16, a user interface unit 18, a storage control unit 20, a storage unit 22, a display control unit 24 and an external interface control unit 26.

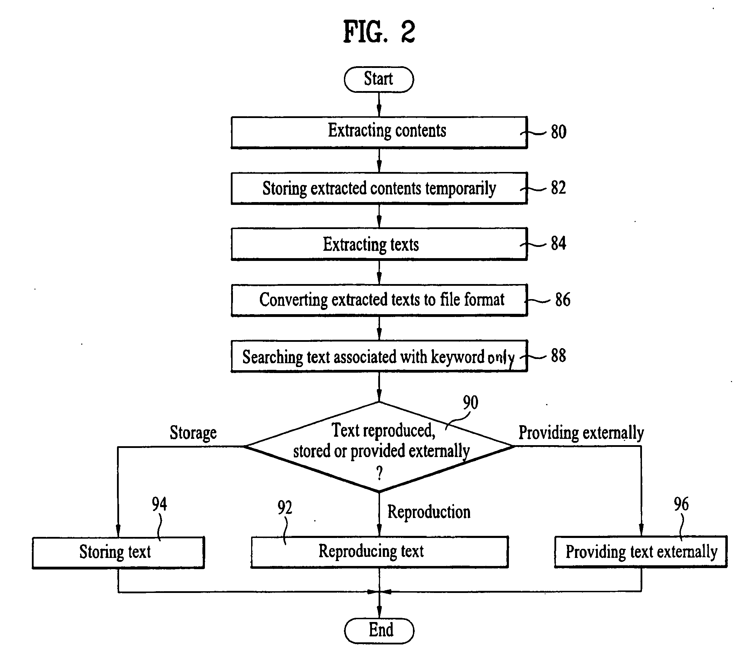

FIG. 2 is a flowchart for a method of processing texts in a digital broadcast receiver according to an embodiment of the present invention.

Referring to FIG. 2, a method of processing texts in a digital broadcast receiver according to an embodiment of the present invention includes operations 80 to 84 of extracting contents and a text and operations 86 to 96 of processing the text.

The contents extracting unit 10 shown in FIG. 1 receives data inputted to a digital broadcast receiver via an input terminal IN and decodes the received data to extract corresponding contents (operation 80). In this case, the data inputted to the digital broadcast receiver means the data received from a digital TV broadcast stream. The contents extracted by the contents extracting unit 10 is outputted to the text extracting unit 14 via the buffer 12.

In the present invention, the contents extracted by the contents extracting unit 10 mean contents for a supplementary service such as a caption broadcast and the like as well as audio and video as main contents, which include the text and are provided to a digital TV receiver in a digital TV broadcasting service. These contents include at least one of caption contents, subtitle contents, teletext contents, data broadcast contents and ticker data contents for a service such as a breaking news in a broadcast.

For instance, the contents extracting unit 10 includes at least one of a caption processing unit 40, a subtitle processing unit 42, a teletext processing unit 44, a data broadcast processing unit 46, a ticker processing unit 48 and a rest processing unit 50.

The caption processing unit 40, as shown in FIG. 1, extracts caption contents by decoding the data received via the input terminal IN and then outputs the extracted caption contents to the text extracting unit 14 via the buffer 12.

The subtitle processing unit 42 extracts subtitle contents by decoding the data received via the input terminal IN and then outputs the extracted subtitle contents to the text extracting unit 14 via the buffer 12.

The teletext processing unit 44 extracts teletext contents by decoding the data received via the input terminal IN and then outputs the extracted teletext contents to the text extracting unit 14 via the buffer 12.

The data broadcast processing unit 46 extracts data broadcast contents by decoding the data received via the input terminal IN and then outputs the extracted data broadcast contents to the text extracting unit 14 via the buffer 12.

The ticker processing unit 48 extracts ticker data contents by decoding the data received via the input terminal IN and then outputs the extracted ticker data contents to the text extracting unit 14 via the buffer 12.

And, the rest processing unit 50 extracts various kinds of contents by decoding the data received via the input terminal IN and then outputs the extracted contents to the text extracting unit 14 via the buffer 12.

After completion of the operation 80, the buffer 12 receives the contents extracted by the contents extracting unit 10, stores the received contents temporarily, and outputs a storage result to the text extracting unit 14 (operation 82).

After completion of the operation 82, the text extracting unit 14 extracts a text from the contents of the digital broadcast receiver received from the buffer 12 (operation 84).

Alternatively, unlike FIG. 1, the text processing apparatus may not include at least one of the contents extracting unit 10 and the buffer 12.

For instance, in case that the contents extracting unit 10 is not included, the data inputted via the input terminal IN is provided to the text extracting unit 14 via the buffer 12. The text extracting unit 14 then extracts the text from the data of the digital broadcast receiver inputted from the buffer 12.

In case that both of the contents extracting unit 10 and the buffer 12 are not included, the data inputted via the input terminal IN is inputted to the text extracting unit 14.
The text extracting unit 14 then extracts the text from the data of the digital broadcast receiver inputted from the input terminal IN.

In case that the buffer 12 is not included, the contents extracted by the contents extracting unit 10 are directly inputted to the text extracting unit 14. Hence, the text extracting unit 14 extracts the text from the contents inputted from the contents extracting unit 10.

After the completion of the operation 84, the text processing unit 16 processes the text extracted by the text extracting unit 14 (86 ∼ 96).

To perform the operations 86 to 96, the text processing unit 16 includes a text converting unit 60, a keyword searching unit 62 and a text control unit 64.

After completion of the operation 84, the text converting unit 60 receives the text extracted from the text extracting unit 14, converts it to a file format, and outputs the converted file format to the keyword searching unit 62 (operation 86).

In this case, the file format converted by the text converting unit 60 can be decided by a user. For this, the user interface unit 18 outputs a user signal of requirements received from the user to the text converting unit 60. The text converting unit 60 determines a file format corresponding to the user signal received from the user interface unit 18 and then converts the extracted text to the determined file format. The file format converted by the text converting unit 60 can have an extension such as '.txt', `.hwp', `.doc' and the like compatible with software as well as various instruments.

After completion of the operation 86, the keyword searching unit 62 searches the converted file for texts associated with a keyword only and then outputs the searched texts to the text control unit 64 (operation 88). Thus, the text processing apparatus includes the keyword searching unit 62 to search a necessary text only using a keyword. For this, the keyword searching unit 62 converts the result converted by the text converting unit 60 to ASCII (American Standard Code for Information Interchange) code and then searches the ASCII code for the text associated with the keyword.

In this case, the text associated with the keyword can include at least one of a keyword and an extent associated with the keyword and can be determined by a user. In particular, the text associated with the keyword used in the keyword searching unit 62 can be modified by the user. In this case, the extent associated with the keyword means whether the keyword itself will be searched or how much extent from the keyword will be searched. For this, the user interface unit 18 outputs the user signal as the requirements received from the user to the keyword searching unit 62. Hence, the keyword searching unit 62 determines according to the user signal at least one of the keyword and the extent associated with the keyword and then searches the text using the determined result. For instance, a user can set the keyword searching unit 62 to search each sentence or paragraph including the keyword and can set the text control unit 64 to control the storage control unit 20 so that the searched result can be stored in the storage unit 22, with using the user interface unit 18. For this, the storage control unit 20 plays a role in controlling a write and read of the storage unit 22 under the control of the text control unit 64.

After completion of the operation 88, the text control unit 64 decides whether the text searched by the keyword searching unit 62 shall be reproduced, stored or provided to outside (operation 90). In this case, the operation 90 can be decided by a user. For this, the user interface unit 18 outputs a user signal as requirements received from the user to the text control unit 64. In this case, the text control unit 64 decides at least one of a text storage, an external text output and a text reproduction, corresponding to the user signal inputted from the user interface unit 18.

If it is decided that the text searched by the keyword searching unit 62 is to be reproduced, the text control unit 64 outputs the text searched by the keyword searching unit 62 to a reproducing unit (not shown) (operation 92). In this case, the reproducing unit (not shown) can include a display unit (not shown) that displays a video. If it is decided to display the text searched by the keyword searching unit 62, the text control unit 64 outputs the text searched by the keyword searching unit 62 to the display control unit 24. In this case, the display control unit 24 analyzes the searched text inputted from the text control unit 64, generates a control signal for controlling a video signal displaying the text, corresponding to the analyzed result, and outputs the generated control signal to the display unit (not shown) via an output terminal OUT1. Hence, the display unit (not shown) can display the corresponding text according to the control signal. In this case, the display unit (not shown) may include a front panel (not shown) connected to the digital broadcast receiver, a monitor (not shown) or the like. In the present invention, the display control unit 24, as shown in FIG. 1, is built in the text processing apparatus. Alternatively, the display control unit can be provided outside the text processing apparatus.

If it is decided that the text searched by the keyword searching unit 62 is to be stored, the text control unit 64 stores the text searched by the keyword searching unit 62 (operation 94). For this, the text processing apparatus 64, as shown in FIG. 1, can include the storage unit 22 inside. The text control unit 64 stores the text searched by the keyword searching unit 62 in the storage unit 22 using the storage control unit 20. Yet, instead of storing the text in the built-in storage unit 22 shown in FIG. 1, the text control unit 64 can store the text in a storage unit (not shown) provided outside the text processing apparatus. In this case, the text control unit 64 outputs the text to the external storage unit (not shown) via an output terminal OUT3.

Besides, the text control unit 64 can store the text associated with the keyword, e.g., at least one of the keyword and the extent associated with the keyword in the storage unit 22 and can provide the stored text associated with the keyword to the keyword searching unit 62. For this, the text control unit 64 can write the text associated with the keyword in the storage unit 22 by controlling the storage control unit 20 and can read out the text associated with the keyword from the storage unit 22.

If it is decided that the text searched by the keyword searching unit 62 is to be provided outside, the text control unit 64 outputs the text searched by the keyword searching unit 62 externally (operation 96). For instance, to perform the operation 96, the text control unit 64 outputs the searched text to the external interface control unit 26. In this case, the external interface control unit 26 can provide the searched text inputted from the text control unit 64 to such an external device as a printer (not shown), a peripheral device (not shown), a computer (not shown), a portable terminal (not shown) and the like via an output terminal OUT2. In this case, the external interface control unit 26 can include a control unit of the printer or the like for example. In this case, the external interface control unit 26, can be provided outside instead of being built in the text processing apparatus, as shown in FIG. 1, according to the present invention.

According to another embodiment, the text processing unit 16 may not include at least one of the keyword searching unit 62 and the text converting unit 60.

For instance, if the text processing unit 16, as shown in FIG. 1, does not include the text converting unit 60, the method shown in FIG. 2 does not include the operation 86. In this case, after completion of the operation 84, the keyword searching unit 62 searches the texts extracted by the text extracting unit 14 for the texts associated with the keyword only and then outputs the searched texts to the text control unit (operation 88). The keyword searching unit 62 converts the result extracted by the text extracting unit 14 to an ASCII code and then searches the converted ASCII code for the text associated with the keyword only.

If the text processing unit 16 does not include the keyword searching unit 62, the method shown in FIG. 2 does not include the operation 88. In this case, the text control unit 64 reproduces, stores or externally provides the file-formatted text converted by the text converting unit 60 instead of the text searched by the keyword searching unit 62 (operation 92, operation 94, operation 96).

If the text processing unit 16 does not include both of the text converting unit 60 and the keyword searching unit 62, the method shown in FIG. 2 does not include both of the operations 86 and 88. In this case, the text control unit 64 reproduces, stores or provides externally the text extracted by the text extracting unit 14 instead of the text searched by the keyword searching unit 62 (operation 92, operation 94, operation 96).

In the above-explained text processing apparatus and method according to the present invention, a user can examine the text extracted from the caption contents via a screen or can print it out. Moreover, the text extracted from the caption contents is transferred in a file format to a computer or a mobile terminal to be examined later. Hence, by examining the text only later, the same effect of viewing an entire broadcast program can be brought about.

A user may obtain the summarized information by storing the text extracted from the data broadcast contents. For instance, if a digital broadcast signal corresponds to news, caption of the news is extracted as a text to be stored. If the stored text is provided via a monitor (not shown) and the like, a user can view the news like newspaper.

Meanwhile, if a news program is received by the digital broadcast receiver, a user sets a keyword to 'LG' to collect to store news associated with 'LG' from the news program. In this case, the keyword searching unit 62 searches texts having the keyword of 'LG'. If the user determines prescribed portions positioned before and after the keyword 'LG' as the extent associated with the keyword, the keyword searching unit 62 searches the prescribed portions positioned before and after the keyword `LG'. In this case, the keyword 'LG' and the prescribed portions positioned before and after the keyword, which are the result searched by the keyword searching unit 62, can be stored in the storage unit 22 by controlling the storage control unit 20 via the text control unit 64. Hence, the user can collect and store the contents associated with a specific keyword only.

A record medium readable by a computer includes all kinds of storage devices that can store data readable by a computer system. As an example of the record medium readable by the computer, there is ROM, RAM, CD-ROM, magnetic tape, floppy disc, optical data storage device or the like. And, the record medium readable by the computer includes a device that can be implemented in a form of carrier wave (e.g., transmission via Internet). And, the record medium readable by the computer is dispersed into a computer system connected via network. So, by dispersion a code readable by a computer can be stored to be executed. Moreover, a function program, a code and code segments to implement the user tracking method is facilitated to be deduced by programmers skilled in the art to which the present invention belongs.

Accordingly, the present invention provides the following effects or advantages.

First of all, if a user decides that an information quantity to be obtained is small by considering the entire viewing time of a digital broadcast, i.e., if the information quantity obtained over the entire viewing time is small or if a user is unable to view a digital broadcast, the user can acquire the specific information of the broadcast or the simple and summarized information for a video using the text without viewing the entire broadcast. Hence, the user can efficiently acquire the information.

Secondly, by searching texts using a keyword, a user can acquire accurate and summarized information from a digital broadcast video.

Thirdly, if a user attempts to obtain specific information from a digital broadcast, although a PVR function and the like is utilized due to the lack of time for viewing the digital broadcast, it is problem that an enormous storage capacity is needed due to a long-term record of audio and video signals. Here, the present invention prevents such a problem to efficiently use the storage device.

Fourthly, the text can be converted in various ways to be stored or provided outside. Hence, a computer or other mobile terminals can use the contents of a broadcast program.

Finally, a text is facilitated to be simply generated from data using contents for supplementary services without being forcibly generated. Hence, a load of hardware is reduced.

## Claims

1. An apparatus for processing texts in a digital broadcast receiver; comprising:
a text extracting unit (14) for extracting texts from a broadcast stream of data inputted to the digital broadcast receiver;
a user interface unit (18) for outputting a keyword which is received from a user;
a text converting unit (60) for converting each of the extracted texts received from said text extracting unit (14) to a determined file format;
a keyword searching unit (62) for searching for a text associated with the keyword received from the user out of the extracted texts received from said text converting unit (64); and
a display control unit (24) for controlling display of the searched texts to the user;
wherein the user interface unit (18) being arranged for outputting as a user signal requirements received from the user, and wherein the text converting unit (60) is arranged for converting each of the extracted texts to the file format determined based on the user signal.

2. The apparatus of claim 1, wherein the keyword searching unit (62) is arranged for searching the text associated with a keyword only.

3. The apparatus of claim 1, wherein the keyword searching unit (62) is adapted to convert each of the converted texts to an ASCII code and to search the ASCII codes for the text associated with the keyword only.

4. The apparatus of claim 1, wherein the apparatus further comprises a text control unit (64) for reproducing or outputting externally the searched texts.

5. The apparatus of claim 4, further comprising a storage unit (22) storing the searched texts,
wherein the text control unit (64) stores the searched texts in the storage unit (22).

6. The apparatus of claim 1, wherein the apparatus further comprises a contents extracting unit (10) for extracting contents by decoding the broadcast stream of data inputted to the digital broadcast receiver, the contents extracting unit (10) being adapted for outputting the extracted contents to the text extracting unit (16).

7. The apparatus of claim 6, wherein the contents extracted by the contents extracting unit (10) comprise at least one of caption contents, subtitle contents, teletext contents, data broadcast contents and ticker data contents.

8. The apparatus of claim 7, wherein the contents extracting unit (10) comprises:
a caption processing unit (40) for extracting the caption contents by decoding the data;
a subtitle processing unit (42) for extracting the subtitle contents by decoding the data;
a teletext processing unit (44) for extracting the teletext contents by decoding the data;
a data broadcast processing unit (46) for extracting the data broadcast contents by decoding the data; and
a ticker processing unit (48) for extracting the ticker data contents by decoding the data.

9. The apparatus of claim 6, wherein the apparatus further comprises a buffer (12) for temporarily storing extracted contents inputted from the contents extracting unit (10), and for outputting a stored result to the text extracting unit.

10. A method of processing texts in a digital broadcast receiver, comprising:
extracting the texts from a broadcast stream of data inputted to the digital broadcast receiver;
receiving a keyword from a user;
converting each of the extracted texts to a file format determined by a signal received from the user;
searching the converted file for a text associated with the keyword received from the user; and
displaying the searched texts to the user.

11. The method of claim 10, further comprising storing the searched results.

## Patentansprüche

1. Vorrichtung zur Verarbeitung von Texten in einem digitalen Rundfunkempfänger mit:
einer Textextraktionseinheit (14) zum Extrahieren von Texten aus einem gesendeten Datenstrom, der in den digitalen Rundfunkempfänger eingegeben wird;
einer Benutzerschnittstelleneinheit (18) zum Ausgeben eines Schlüsselworts, das von einem Benutzer empfangen wird;
einer Textkonvertierungseinheit (60) zum Konvertieren jedes der extrahierten Texte, die von der Textextraktionseinheit (14) empfangen werden, in ein bestimmtes Dateiformat;
einer Schlüsselwortsucheinheit (62) zum Suchen nach einem Text, der dem vom Benutzer empfangenen Schlüsselwort zugeordnet ist, aus den extrahierten Texten, die von der Textkonvertierungseinheit (64) empfangen werden; und
einer Anzeigesteuereinheit (24) zum Steuern der Anzeige der gesuchten Texte für den Benutzer;
wobei die Benutzerschnittstelleneinheit (18) zum Ausgeben von Anforderungen, die von einem Benutzer empfangen werden, als Benutzersignal angeordnet ist und wobei die Textkonvertierungseinheit (60) zum Konvertieren jedes der extrahierten Texte in das Dateiformat angeordnet ist, das auf der Grundlage des Benutzersignals bestimmt ist.

2. Vorrichtung nach Anspruch 1, wobei die Schlüsselwortsucheinheit (62) zum Suchen des Textes angeordnet ist, der nur einem Schlüsselwort zugeordnet ist.

3. Vorrichtung nach Anspruch 1, wobei die Schlüsselwortsucheinheit (62) ausgebildet ist, jeden der konvertierten Texte in einen ASCII-Code zu konvertieren und die ASCII-Codes nach dem Text zu durchsuchen, der nur dem Schlüsselwort zugeordnet ist.

4. Vorrichtung nach Anspruch 1, wobei die Vorrichtung ferner eine Textsteuereinheit (64) zum externen Wiedergeben oder Ausgeben der gesuchten Texte aufweist.

5. Vorrichtung nach Anspruch 4, ferner mit einer Speichereinheit (22), die die gesuchten Texte speichert,
wobei die Textsteuereinheit (64) die gesuchten Texte in der Speichereinheit (22) speichert.

6. Vorrichtung nach Anspruch 1, wobei die Vorrichtung ferner eine Inhaltsextraktionseinheit (10) zum Extrahieren von Inhalten durch Decodieren des gesendeten Datenstroms aufweist, der in den digitalen Rundfunkempfänger eingegeben wird, wobei die Inhaltsextraktionseinheit (10) zum Ausgeben der extrahierten Inhalte zur Textextraktionseinheit (16) ausgebildet ist.

7. Vorrichtung nach Anspruch 6, wobei die durch die Inhaltsextraktionseinheit (10) extrahierten Inhalte Bildtextinhalte, Untertitelinhalte, Videotextinhalte, Datensendeinhalte und/oder Tickerdateninhalte aufweisen.

8. Vorrichtung nach Anspruch 7, wobei die Inhaltsextraktionseinheit (10) aufweist:
eine Bildtext-Verarbeitungseinheit (40) zum Extrahieren der Bildtextinhalte durch Decodieren der Daten;
eine Untertitel-Verarbeitungseinheit (42) zum Extrahieren der Untertitelinhalte durch Decodieren der Daten;
eine Videotext-Verarbeitungseinheit (44) zum Extrahieren der Videotextinhalte durch Decodieren der Daten;
eine Datensende-Verarbeitungseinheit (46) zum Extrahieren der Datensendeinhalte durch Decodieren der Daten; und
eine Ticker-Verarbeitungseinheit (48) zum Extrahieren der Tickerdateninhalte durch Decodieren der Daten.

9. Vorrichtung nach Anspruch 6, wobei die Vorrichtung ferner einen Puffer (12) zum Zwischenspeichern extrahierter Inhalte, die von der Inhaltsextraktionseinheit (10) eingegeben werden, und zum Ausgeben eines gespeicherten Ergebnisses zur Textextraktionseinheit aufweist.

10. Verfahren zur Verarbeitung von Texten in einem digitalen Rundfunkempfänger mit:
Extrahieren der Texte aus einem gesendeten Datenstrom, der in den digitalen Rundfunkempfänger eingegeben wird;
Empfangen eines Schlüsselworts von einem Benutzer;
Konvertieren jedes der extrahierten Texte in ein Dateiformat, das durch ein vom Benutzer empfangenes Signal bestimmt ist;
Durchsuchen der konvertierten Datei nach einem Text, der dem vom Benutzer empfangenen Schlüsselwort zugeordnet ist; und
Anzeigen der gesuchten Texte für den Benutzer.

11. Verfahren nach Anspruch 10, ferner mit Speichern der Suchergebnisse.

## Revendications

1. Dispositif de traitement de textes dans un récepteur de radiodiffusion numérique comprenant :
une unité d'extraction de texte (14) pour l'extraction de textes d'un flux de données de radiodiffusion entré dans le récepteur de radiodiffusion numérique ;
une unité d'interface utilisateur (18) pour transmettre un mot clé qui est reçu d'un utilisateur ;
une unité de conversion de texte (60) pour convertir chacun des textes extraits reçus de ladite unité d'extraction de texte (14) à un format de fichier déterminé ;
une unité de recherche de mot clé (62) pour chercher un texte associé au mot clé reçu de l'utilisateur parmi les textes extraits reçus de ladite unité de conversion de texte (64) ; et
une unité de commande d'affichage (24) pour commander l'affichage des textes recherchés pour l'utilisateur ;
dans lequel l'unité d'interface utilisateur (18) agencée pour transmettre en tant que signal utilisateur des exigences reçues de l'utilisateur, et dans lequel l'unité de conversion de texte (60) est agencée pour convertir chacun des textes extraits au format de fichier déterminé en fonction du signal utilisateur.

2. Dispositif selon la revendication 1, dans lequel l'unité de recherche de mot clé (62) est agencée pour rechercher le texte associé à un mot clé uniquement.

3. Dispositif selon la revendication 1, dans lequel l'unité de recherche de mot clé (62) est adaptée pour convertir chacun des textes convertis en un code ASCII et pour rechercher les codes ASCII pour le texte associé au mot clé uniquement.

4. Dispositif selon la revendication 1, dans lequel le dispositif comprend en outre une unité de commande de texte (64) pour reproduire et transmettre de manière externe les textes recherchés.

5. Dispositif selon la revendication 4, comprenant en outre une unité de mémorisation (22) mémorisant les textes recherchés,
dans lequel l'unité de commande de texte (64) mémorise les textes recherchés dans l'unité de mémorisation (22).

6. Dispositif selon la revendication 1, dans lequel le dispositif comprend en outre une unité d'extraction de contenu (10) pour extraire le contenu en décodant le flux de données de radiodiffusion entré dans le récepteur de radiodiffusion numérique, l'unité d'extraction de contenu (10) étant adaptée pour transmettre les contenus extraits dans l'unité d'extraction de texte (16).

7. Dispositif selon la revendication 6, dans lequel les contenus extraits par l'unité d'extraction de contenus (10) comprennent au moins l'un des contenus de légendes, des contenus de sous-titres, des contenus de télétextes, des contenus de radiodiffusion de données et des contenus de données de téléscripteur.

8. Dispositif selon la revendication 7, dans lequel l'unité d'extraction de contenus (10) comprend :
une unité de traitement de légendes (40) pour extraire les contenus de légendes en décodant les données ;
une unité de traitement de sous-titres (42) pour extraire les contenus de sous-titres en décodant les données ;
une unité de traitement de télétexte (44) pour extraire les contenus de télétexte en décodant les données ;
une unité de traitement de radiodiffusion de données (46) pour extraire les contenus de radiodiffusion de données en décodant les données ; et
une unité de traitement de téléscripteur (48) pour extraire les contenus de données de téléscripteur en décodant les données.

9. Dispositif selon la revendication 6, dans lequel le dispositif comprend en outre une mémoire tampon (12) pour mémoriser temporairement les contenus extraits entrés depuis l'unité d'extraction de contenus (10) et pour transmettre un résultat mémorisé à l'unité d'extraction de texte.

10. Procédé de traitement de textes dans un récepteur de radiodiffusion numérique comprenant des étapes consistant à :
extraire les textes provenant d'un flux de données de radiodiffusion entrées dans un récepteur de radiodiffusion numérique ;
recevoir un mot clé d'un utilisateur ;
convertir chacun des textes extraits à un format de fichier déterminé par un signal
reçu de l'utilisateur ;
rechercher dans le fichier converti un texte associé au mot clé reçu de l'utilisateur ; et
afficher les textes recherchés pour l'utilisateur.

11. Procédé selon la revendication 10, comprenant en outre une étape consistant à mémoriser les résultats recherchés.
